# EUROPÄISCHE PATENTSCHRIFT

(11) **EP 1 254 593 B1**
(45) Veröffentlichungstag und Bekanntmachung des Hinweises auf die Patenterteilung: **27.02.2008**
(21) Anmeldenummer: 02009676.4
(22) Anmeldetag: 29.04.2002
(51) Int. Cl.: A01B 29/04

(54) **Bodenbearbeitungsgerät zur Zerkleinerung von grobschollig verarbeiteten Flächen**
Soil working tool for comminuting coarsely worked fields
Outil pour émietter des sols grossièrement travaillés

(30) Priorität: 02.05.2001 DE 10121382
(43) Veröffentlichungstag der Anmeldung: 06.11.2002
(73) Patentinhaber: Kerner, Josef, D-89344 Aislingen (DE)
(72) Erfinder: Kerner, Josef, D-89344 Aislingen (DE)
(74) Vertreter: GROSSE BOCKHORNI SCHUMACHER

(56) Entgegenhaltungen:
- EP-A- 0 242 932
- EP-A- 1 046 328
- DE-C- 512 078
- US-A- 4 339 004

## Beschreibung

Die Erfindung betrifft ein Bodenbearbeitungsgerät gemäß dem Oberbegriff des Patentanspruches 1.

Das Dokument EP 0 242 932 A zeigt eine Erdreich bearbeitende Maschine, mit einem Tragarm und einem Abstreifer. Im Stand der Technik sind Bodenbearbeitungsgerätebekannt, die zur Verkleinerung von grobscholligem Erdreich und dessen Rückverfestigung eine Walze aus mehreren nebeneinander angeordneten Walzenrädern aufweisen (vgl. EP 1 046 328 A2), die auf einem Walzenläufer angeordnet sind, der mit seiner Drehachse in seitlichen Rahmenwangen gelagert ist. Zur Zerkleinerung des Erdreichs zwischen den Walzenrädern sind Zinken vorgesehen, die an Tragarmen befestigt sind. Diese Zinken sind unter flachem Anstellwinkel angeordnet und zwar bezogen auf die Arbeitsrichtung des Geräts schräg rückwärts abfallend hinter der Drehachse des Walzenläufers. Zugleich sind zwischen benachbarten Walzenrädern Abstreifer vorgesehen, deren Aufgabe darin besteht, insbesondere im Falle der Bearbeitung von nassem Erdreich an den Walzenrädern und am Walzenläufer anhaftendes Erdreich zu entfernen. Diese Zinken und Abstreifer sind im Stand der Technik an Tragarmpaaren befestigt, die um den Walzenläufer nach hinten und oberhalb des Walzenläufers in Arbeitsrichtung nach vorne zu einem Querträger geführt und dort angelenkt sind, der mit dem Rahmen verbunden ist. Der Querträger ist hierbei in Arbeitsrichtung gesehen vor der Drehachse des Walzenläufers angeordnet. Um beim Überfahren von Hindernissen ein Ausweichen des Tragarmaufbaus zu ermöglichen, ist dieser gegenüber dem Rahmen federnd abgestützt. Die am freien Ende des Tragarmaufbaus angeordneten Zinken sind mit einem vorstehenden Abstreifer bestückt, der in Richtung auf den Walzenläufer gerichtet ist. Da bei allfälligen Ausgleichsbewegungen des Tragarmaufbaus die Zinken und die daran am vorderen Ende angeordneten Abstreifer nach oben gegen die Walzenläuferachse bewegt werden, müssen das vordere Ende der Zinken sowie die Abstreifer einen die Ausgleichsbewegung zulassenden Abstand zur Walzenachse aufweisen bzw. muß der Abstreifer entsprechend geformt sein, um den Walzenläufer zu hintergreifen. Die Anordnung und Ausbildung des Abstreifers muß deswegen so ausgeführt werden, daß eine Kollision der Schabkante und übriger Bauteile des Zinkens sowie des Abstreifers mit dem Walzenläufer verhindert wird und gleichwohl die Schabkante ausreichend nahe an den Walzenläufer herangeführt ist, um die Abstreiffunktion zu erfüllen. Insgesamt führt dies zu einer vergleichsweise aufwendigen Tragarmkonstuktion, was eine große Bauweise zur Folge hat und auch zu einem erheblichen Mehrgewicht führt.

Aufgabe der Erfindung ist es, ein Bodenbearbeitungsgerät der gattungsgemäßen Art zu schaffen, der bei geringem Eigengewicht und platzgünstiger Bauweise eine einwandfreie und störungsfreie Bodenbearbeitung ermöglicht, ohne daß es durch anhaftendes Erdreich und Steine zu einer Zerstörung der Walze oder zu einem Bremsen oder Stillstand des Bodenantriebs der Walze kommen kann.

Diese Aufgabe wird erfindungsgemäß durch die im kennzeichnenden Teil des Anspruches 1 enthaltenen Merkmale gelöst, wobei zweckmäßige Weiterbildungen durch die in den Unteransprüchen enthaltenen Merkmale gekennzeichnet sind.

Nach Maßgabe der Erfindung werden die Tragarme, die den die Zinken und Abstreifer tragenden Querträger aufnehmen, derart am Rahmen angelenkt, daß bei allfälligen Ausgleichsbewegungen des Tragarmaufbaus entgegen der federnden Abstützung die Zinken und Abstreifer, insbesondere die zum Abstreifen des Walzenläufers vorgesehene Schabkante nicht unter Verringerung des Abstands zum Walzenläufer in Richtung auf den Walzenläufer geführt, vielmehr entweder unter Einhaltung des Abstands oder aber unter Vergrößerung des Abstands vom Walzenläufer weggeführt werden. Dadurch ist jegliche Kollisionsgefahr zwischen diesen Teilen und dem Walzenläufer ausgeschaltet, so daß wiederum der Abstreifer in einfacher Ausführung sehr nahe an die Mantelfläche des Walzenläufers herangeführt werden kann. Eine spezielle Abstreiferkonfiguration ist deshalb in Anpassung an den Walzenläufer nicht mehr erforderlich. Vielmehr genügt als Abstreifer ein am vorderen Ende eine Schabkante bildendes Stegteil, welches zudem als Befestigungselement für die Zinke dienen kann. Zweckmäßigerweise ist der Abstreifer als bogenförmiges Bauteil ausgeführt und dient zugleich als Träger für die Zinke. Die Zinke ist hierbei in zweckmäßiger Weise am vorderen Ende und zwar unterhalb des Abstreifers angeschweißt, wodurch hervorstehende Befestigungselemente entfallen, die wiederum Störstellen für ein Anbacken von nassem Erdreich bilden könnten. Der Abstreifer ist hierbei zweckmäßigerweise mit seinem hinteren Ende am Querträger befestigt, etwa verschraubt. Die bogenförmige oder einem Bogen angenäherte Kontur des Abstreifers vergrößert die wirksame Länge des Abstreifers, so daß das anhaftende Material in sehr wirksamer Weise zwischen den Walzenrädern nach hinten gefördert wird. Zugleich wird die beim Überfahren von Steinen und dergleichen erforderliche Ausgleichsfunktion infolge dieser Formgebung durch nach hinten ausgeworfenes Erdreich nicht gestört. Ferner wird der Querträger 11 in Arbeitsrichtung A des Bodenbearbeitungsgeräts gesehen hinter der Drehachse 6 angeordnet.

In Bezug auf die Anlenkung des Tragarmaufbaus ist es zweckmäßig, daß der Anlenkpunkt am Rahmen in Höhe der Drehachse des Walzenläufers oder aber oberhalb im Nahbereich dieser Drehachse liegt. Bevorzugt ist hierbei die Anordnung des Anlenkpunktes innerhalb des Radiusbereiches des Walzenläufers.

Insgesamt resultiert aus diesen Maßnahmen ein sehr einfacher und gegenüber dem Stand der Technik leichtgewichtigerer und vergleichsweise kleiner dimensionierter Aufbau, was deswegen von Vorteil ist, weil das Bodenbearbeitungsgerät üblicherweise neben weiteren Geräten am Ackerschlepper aufgehängt werden muß. In diese Richtung wirkt auch die Maßnahme, daß der Abstreifer zugleich Träger für den Zinken darstellt. Dabei können Abstreifer und Zinken aus gehärtetem Blattfedermaterial hergestellt sein, woraus sich wiederum ein im gewissen Sinne federnder Aufbau bzw. Lagerung der Zinken ergibt.

Die Stirnseite des Abstreifers liegt im unteren Bereich des Walzenläufers. Der Querträger, der die Zinken und Abstreifer aufnimmt ist in Arbeitsrichtung gesehen hinter der Drehachse des Walzenläufers angeordnet. Zinken und Abstreifer können eine Einheit bilden, so daß im Übergangsbereich keine Störkanten für Erdreich und Steine entstehen. Der Drehpunkt der Abstreifer und Zinken im oder oberhalb des als Achsmittelpunkts des Walzenläufers gewährleistet ein sicheres Abstreifen des Erdreiches vom Walzenläufer. Der hintere Teil des Abstreifers räumt den Zwischenraum zwischen den Walzenrädern bis zum Außenbereich frei. Durch den wie oben gewählten Anlenkpunkt ergibt sich eine kurze Bauweise von Abstrei fer und Walze.

Bei überbreiten Walzenkonstruktionen kann die Aufhängung des hinteren Querrohres durch weitere Zwischenträger zweckmäßig sein, die über bogenförmige Gleit- oder Wälzelemente oder Lenkhebelkombinationen am Rahmen befestigt und geführt sind, so daß eine radiale Bewegung der Zinken und Abstreifer um den Walzenläufer möglich ist. Durch diese Ausführungsform können beliebig viele Aufhängungspunkte im Walzenbereich gewählt werden.

Nachfolgend werden bevorzugte Ausführungsbeispiele der Erfindung anhand der Zeichnung beschrieben. Darin zeigen
- Fig. 1: eine Schnittansicht durch ein Bodenbearbeitungsgerät,
- Fig. 2: eine Schnittansicht eines Bodenbearbeitungsgeräts entsprechend Fig. 1, jedoch mit einem Zwischenträger sowie
- Fig. 3: eine Ausführungsform entsprechend Fig. 2 als alternative Ausführungsform.

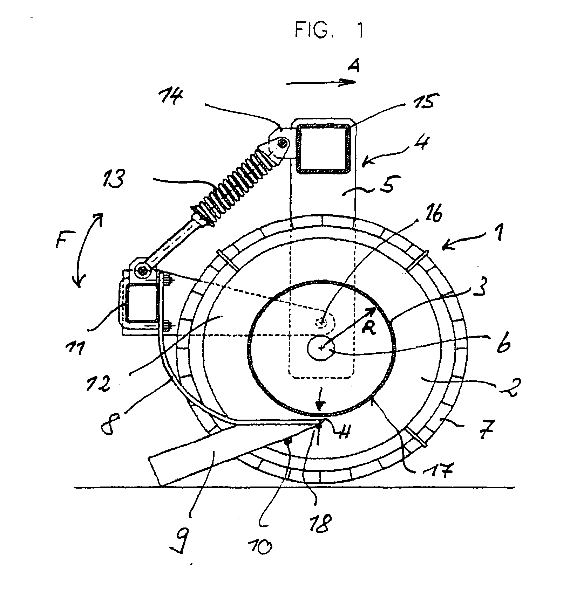

Fig. 1 zeigt eine Schnittansicht durch ein Bodenbearbeitungsgerät, welches aus einer Walze 1 gebildet ist, die sich aus mehreren in Abstand zueinander angeordneten Walzenrädern 2 oder Scheiben zusammensetzt, die auf einem rohrartigen Walzenläufer 3 angeordnet sind. Die Walzenräder oder Scheiben können in beliebigem Aufbau eingesetzt werden. Sie können aus Halbschalen zusammengesetzt, einwandig ausgebildet oder als Speichenrad oder -scheibe ausgebildet sein, je nachdem ob sie mehr verfestigen oder in den zu beabeitenden Boden einschneiden sollen. An den beiden stirnseitigen Enden ist die Walze 1 in einem Rahmen 4 gelagert, der hier durch zwei stirnseitig angeordnete Rahmenwangen 5 gebildet ist, von denen infolge der Schnittansicht nur eine Rahmenwange 5 zeichnerisch dargestellt ist. Der Walzenläufer 3 ist mit seiner Drehachse 6 an seinen stirnseitigen Enden in den Rahmenwangen 5 drehbar gelagert.

Im dargestellten Ausführungsbeispiel sind die Walzenräder 2 mit geschlossenen Seitenwänden ausgeführt, die durch Halbschalen gebildet sind. Zur besseren Bearbeitung des Bodens verjüngen sich die Walzenräder an ihrem Außenumfang im wesentlichen V-förmig oder pfeilförmig oder sind alternativ mit einem gewellten Steg und Querstegen ausgerüstet. In Fig. 1 ist der gewellte pfeilförmige Laufring mit 7 bezeichnet.

Um anhaftendes Erdreich zwischen den Walzenrädern zu entfernen, sind zwischen zwei benachbarten Walzenrädern 2 Abstreifer 8 angeordnet, die insbesondere zugleich als Tragarme für messerartige Zinken 9 dienen. Diese Zinken 9 sind schräg mit flachem Anstellwinkel und in Bezug auf die mit Pfeilrichtung A angedeutete Arbeitsrichtung des Gerätes schräg rückwärts abfallend angeordnet. Hierbei liegen die Zinkenenden hinterhalb der Drehachse 6 der Walzenräder 2. Die Abstreifer 8 sind zweckmäßigerweise so ausgebildet, daß sie im wesentlichen den Abstand zwischen den benachbarten Walzenräder 2 überbrücken, zwischen denen sie angeordnet sind, wobei jedoch toleranzbedingt ein Abstand von einigen Millimetern, insbesondere 3-4 mm zu den Seitenflächen der Walzenräder 2 gewährleistet bleiben soll. Bei Bedarf kann auch der Zinken 9 mit einem zusätzlichen Abstreifer versehen sein, etwa an der mit 10 bezeichneten vorderen Stelle des Zinken 9.

Der Abstreifer 8 ist zweckmäßigerweise aus einem gehärteten blattfederartigen Material hergestellt, welches im dargestellten Ausführungsbeispiel bogig geformt ist. Die Abstreifer 8 sind mit ihren hinteren Enden an einem Querträger 11 befestigt, hier verschraubt. Der zweckmäßigerweise als Hohlprofil ausgebildete Querträger 11 ist mit seinen beiden stirnseitigen Enden über Tragarme 12 an den beiden Rahmenwangen 5 angelenkt. Ersichtlich ist der Querträger 11 in Arbeitsrichtung A des Bodenbearbeitungsgeräts gesehen hinter der Drehachse 6 angeordnet. Ebenso erstrecken sich die beiden Tragarme 12 von den beiden Rahmenwangen 5 weg nach hinten. Überdies ist der Querträger 11 gegenüber dem Rahmen 4 federnd abgestützt und zwar durch Spindelfedern 13, welche an den beiden Walzenstirnseiten an Laschen 14 eines als Hohlprofil ausgebildeten Querträgers 15 des Rahmens 4 befestigt sind. Durch diesen Aufbau ist eine Ausgleichsbewegung des Tragarmaufbaus 12, 11, 8 um den mit 16 bezeichneten Anlenkpunkt am Rahmen 4 entgegen der federnden Abstützung durch die Spindelfedern 13 möglich, um Steinen und dergleichen Hindernissen nach hinten hin ausweichen zu können. Die Ausgleichsbewegung ist schematisch durch Pfeil F bezeichnet. Hierbei ist es so zu verstehen, daß die Darstellung in Fig. 1 die Normalstellung, also die normale Arbeitsstellung des Bodenbearbeitungsgerätes aufzeigt und die Ausgleichsbewegungen um den Anlenkpunkt 16 nach oben hin, d. h. in Gegenuhrzeigerrichtung erfolgen und zwar entgegen der Federwirkung, wobei der Tragarmaufbau durch die Feder wieder selbsttätig in die Ausgangslage zurückgestellt wird.

Der Anlenkpunkt 16 liegt im dargestellten Ausführungsbeispiel oberhalb der Drehachse 6, jedoch in der Nähe der Drehachse. Die dargestellte Gelenkanordnung ist nicht zwingend, jedoch soll der Anlenkpunkt 16 entweder in Höhe der Drehachse 6 liegen oder im Bereich knapp oberhalb dieser Drehachse und zwar bevorzugt innerhalb des Radiusbereiches R des Walzenläufers 3. Durch diese Schwenklagerung des Anlenkpunktes 16 wird gewährleistet, daß der Tragarm 12 und der daran über den Träger 8 angeordnete Zinken 9 bei allfälligen Ausgleichsbewegungen entsprechend Pfeilrichtung F entgegen der Federwirkung nicht den vorgegebenen Abstand zur Umfangsfläche des Walzenläufers 3 verringert, vielmehr entweder unter Wahrung des gleichen Abstands H zur Mantelfläche 17 des Walzenläufers 3 oder unter Vergrößerung dieses Abstands nach hinten weggeführt wird. Dadurch kann die durch das vordere Ende des Abstreifers 8 gebildete Schabkante 18 nahe an die Mantelfläche 17 des Walzenläufers 3 geführt werden, ohne daß bei den allfälligen Ausgleichsbewegungen gegen die Federspindel 13 eine Kollisionsgefahr zwischen Abstreifer und Zinken gegenüber dem Walzenläufer 3 zu befürchten wäre. Gleichzeitig erfolgt durch diese Anordnung eine Optimierung der Abstreiffunktion.

Gemäß dem Ausführungsbeispiel nach Fig. 1 ist der Zinken 9 am vorderen Ende des Abstreifers 8 unterhalb des Abstreifers angeordnet und zwar durch Schweißen, so daß keine vorstehenden Befestigungselemente in Art von Schrauben und dergleichen vorliegen, die zu einem Anhaften und Anbacken von Erdreich, insbesondere nassem Erdreich führen könnten. Der Abstreifer 8 dient damit zugleich als Tragarm für den Zinken 9 und ist infolge seiner blattfederartigen Ausbildung zweckmäßigerweise auch in gewissem Sinne federnd ausgeführt, was wiederum für die Optimierung der Arbeitsweise von Vorteil ist. Anstelle der bogenförmigen Ausführung des Abstreifers 8 ist jedoch auch eine aus abgewinkelten Segmenten zusammengesetzte Kontur des Abstreifers möglich, die der Bogenform weitgehend angepaßt ist. Ebenso könnte der Abstreifer 8 auch in Form eines L-Schenkels geformt sein, wobei jedoch die dargestellte Bogenform oder die einer Bogenform angenäherte Kontur zweckmäßiger ist, weil hierdurch die wirksame Abstreiferlänge zwischen den Walzenrädern vergrößert wird. Wie Fig. 1 zeigt, muß aber die Bogenform nicht streng durchgezogen sein, da insbesondere im vorderen Bereich der Abstreifer 8 etwa längs einer geraden Linie auslaufen kann.

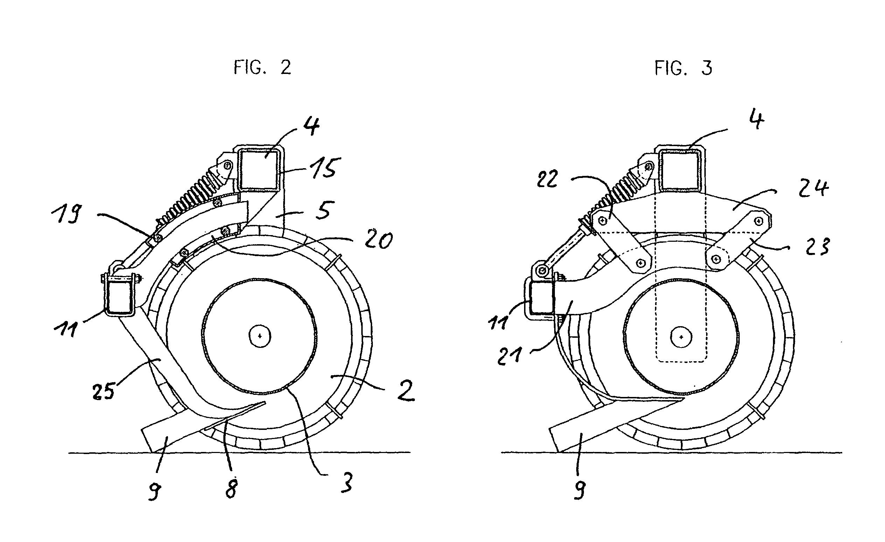

In der Ausführungsform nach Fig. 1 sind die zwischen benachbarte Walzenräder greifenden Abstreifer 8 am Querträger 11 befestigt, der wiederum durch zwei stirnseitig vorgesehene Tragarme an den beiden Rahmenwangen 5 aufgehängt ist. Im Falle größerer Breiten der Walze bzw. des Bodenbearbeitungsgeräts kann es zweckmäßig sein, wenn der Querträger 11 auch in einem Zwischenbereich gegenüber dem Rahmen abgestützt und geführt ist. Entsprechende Ausführungsformen ergeben sich aus den Fig. 2 und 3. Diese Figuren zeigen Schnittansichten zur Darstellung der Aufhängung des Querträgers in einem Zwischenbereich der Walze. In der Ausführungsform nach Fig. 2 ist der Querträger 11 an einem Zwischenträger 19 befestigt, der in einer bogenförmigen Gleitführung 20 am Rahmen 4 geführt und gelagert ist. Die bogenförmige Führung 20 ist hierbei der Bahn der Ausgleichsbewegung des Tragarmes, der hier nicht dargestellt ist, angepaßt, die durch den Anlenkpunkt des Tragarms am Rahmen bestimmt ist.

In der Ausführungsform nach Fig. 2 ist der durch eine Blattfeder gebildete Abstreifer 8 durch einen Armbügel 25 gebildet, der als Stange oder als Stegplatte ausgebildet sein kann. Der langgestreckte Armbügel 25 ist an seinem unteren freien Ende mit einem messerartigen Zinken 9 und einem Abstreifer 8 versehen. Der Abstreifer 8 und die Zinke 9 ist in dieser Ausführungsform am unteren Ende des Armbügels 25 vorzugsweise durch Schweißen angeordnet bzw. befestigt und als Blech- oder Stahlplatte ausgebildet. Die Teile 25; 9; und 8 können auch durch Schrauben, Nieten und dergleichen zusammengefügt werden. Die Teile 25; 9; 8 können auch teilweise oder ganz aus Schmiede- oder Gusskomponenten gefertigt sein. Die Abstreiferplatte 8 überbrückt im wesentlichen den Abstand zwischen den benachbarten Walzenrädern, wobei jedoch wiederum toleranzbedingt ein Abstand von einigen Millimetern, insbesondere 3 bis 4 mm zu den Seitenflächen der Walzenräder 2 gewährleistet bleiben soll. Das vordere Ende der Abstreiferplatte mündet mit dem vorderen freien Ende des Längsbügels 25 aus und ist mit geringem Abstand am Walzenläufer 3 angeordnet. Es versteht sich von selbst, dass zwischen zwei benachbarten Walzenrädern 2 ein messerartiger Zinken oder auch mehrere messerartige Zinken nebeneinander angeordnet sein können, was abhängig von den Abstandsverhältnissen zwischen den Walzenrädern gewählt wird.

Bei der Ausführungsform nach Fig. 3 ist der Zwischenträger 21, an dem der Querträger 11 befestigt ist, über Lenkhebel 22 und 23 an einem Querbügel 24 des Rahmens 4 geführt und befestigt.

## Patentansprüche

1. Bodenbearbeitungsgerät zur Zerkleinerung von grobschollig verarbeiteten Flächen, mit einer Walze (1) aus mehreren Walzenrädern (2), die mit Abstand zueinander auf einem Walzenläufer (3) angeordnet sind, dessen Drehachse (6) in seitlichen Wangen (5) eines Rahmens (4) gelagert ist, die über einen Querträger (15) miteinander verbunden sind, wobei auf dem Rahmen (4) Tragarme (12) angelenkt und federnd abgestützt sind, die einen Querträger (11) tragen und die zwischen je zwei Walzenrädern (2) greifende, schräg mit flachem Anstellwinkel angeordnete Zinken (9) für die Bodenbearbeitung und an dem Querträger (11) angeordnete Abstreifer (8) für die Rückführung von am Gerät zwischen den Walzenrädern anhaftendem Erdreich aufweisen, wobei jeweils eine insbesondere durch die Abstreifer (8) gebildete Schabkante (18) zwischen den Walzenrädern zum Abstreifen von Erdreich vom Walzenläufer (3) vorgesehen ist, **dadurch gekennzeichnet, daß** die Tragarme (12) derart am Rahmen (4) angelenkt sind, daß zumindest die Schabkante (18) bei Ausweichbewegungen der Tragarme (12) gegen die federnde Abstützung ohne Abstandsverringerung zum Walzenläufer (3) mitgeführt wird und der von den Tragarmen (12) getragene Querträger (11) in Arbeitsrichtung A des Bodenbearbeitungsgeräts gesehen hinter der Drehachse (6) angeordnet ist.

2. Gerät nach Anspruch 1, **dadurch gekennzeichnet, daß** die Tragarme (12) am Rahmen (4) in Höhe der Drehachse (6) des Walzenläufers (3) oder oberhalb im Nahbereich dieser Drehachse angelenkt sind.

3. Gerät nach Anspruch 2, **dadurch gekennzeichnet, daß** der Anlenkpunkt (16) der Tragarme (12) innerhalb des Radiusbereiches R des Walzenläufers (3) angeordnet ist.

4. Gerät nach einem der Ansprüche 1 bis 3, **dadurch gekennzeichnet, daß** der Zinken (9) am Abstreifer (8) und dieser am Querträger (11) angeordnet ist.

5. Gerät nach einem der vorhergehenden Ansprüche, **dadurch gekennzeichnet, daß** der Abstreifer (8) im wesentlichen mit bogenförmiger Kontur ausgebildet ist.

6. Gerät nach einem der vorhergehenden Ansprüche, **dadurch gekennzeichnet, daß** der Abstreifer (8) mit seinem hinteren Ende am Querträger (11) befestigt und mit seinem vorderen und die Schabkante (18) bildenden freien Ende nahe an den Umfang des Walzenläufers (3) herangeführt ist.

7. Gerät nach einem der vorhergehenden Ansprüche, **dadurch gekennzeichnet, daß** die Zinken (9) am freien Ende der Abstreifer (8) rückspringend befestigt sind und zwar vorzugsweise angeschweißt sind.

8. Gerät nach einem der vorhergehenden Ansprüche, **dadurch gekennzeichnet, daß** Abstreifer (8) und Zinken (9) aus gehärtetem Blattfedermaterial gebildet sind.

9. Gerät nach einem der vorhergehenden Ansprüche, **dadurch gekennzeichnet, daß** die Zinken (9) mit einem zusätzlichen Abstreifer bei (10) bestückt sind.

10. Gerät nach einem der vorhergehenden Ansprüche, **dadurch gekennzeichnet, daß** die Walze (1) zwei stirnseitig der Walze angeordnete Tragarme (12) aufweist, die an den beiden stirnseitig angeordneten Rahmenwangen (5) gelagert sind und den die Walze (1) überbrückenden und hinterhalb der Drehachse (6) angeordneten Querträger (11) tragen, an dem die Abstreifer (8) als Trägereinrichtung für die Zinken (9) angeordnet sind.

11. Gerät nach einem der vorhergehenden Ansprüche, **dadurch gekennzeichnet, daß** insbesondere bei überbreiten Walzen mindestens ein Zwischenträger (19, 21) für den Querträger (11) vorgesehen ist.

12. Gerät nach Anspruch 11, **dadurch gekennzeichnet, daß** der Zwischenträger über bogenförmige Gleit- oder Wälzführungen (20) am Rahmen (4) geführt und aufgenommen ist oder durch eine Lenkhebelanordnung (22, 23, 24).

13. Gerät nach einem der vorhergehenden Ansprüche, **dadurch gekennzeichnet, daß** die Walzenräder (2) aus geprägten Halbschalen mit einem pfeilförmigen Laufring (7), einem gewellten Steg und Querstegen gebildet sind.

14. Gerät nach einem der vorhergehenden Ansprüche, **dadurch gekennzeichnet, dass** ein blech- oder plattenartiger Abstreifer (8) an einem am Querträger (11) befestigten Bügel (25), insbesondere an dessen unteren freien Ende angeordnet ist, wobei der Abstreifer vorzugsweise durch einen am Bügel angeordneten Zinken (9) versteift ist.

## Claims

1. A soil working device for breaking down surfaces worked into large clods, including a roller (1) consisting of a plurality of roller wheels (2), which are arranged at a spacing from one another on a roller rotor (3), the rotary shaft (6) of which is mounted in lateral cheeks (5) of a frame (4), which are connected together by means of a cross member (11) wherein support arms (12) are pivotally mounted and resiliently supported on the frame (4), which carry a cross member (11) and which have tines (9) which are obliquely disposed with a flat angle of attack and engage between two respective roller wheels (2), and strippers (8), which are disposed on the cross member (11) for returning soil adhering to the device between the roller wheels, wherein a respective scraper edge (18), defined in particular by the stripper edge (8), is provided between the roller wheels for stripping soil from the roller rotor (3), **characterised in that** the support arms (12) are pivotally connected to the frame (4) such that when the support arms (12) perform deflection movements towards the resilient support, at least the scraper edge (18) is moved with them without reducing its spacing from the roller rotor (3) and the cross member (11), which is carried by support arms (12), is arranged behind the rotary shaft (6), seen in the working direction A of the soil working device.

2. A device as claimed in claim 1, **characterised in that** the support arms (12) are pivotally connected to the frame (4) at the height of the rotary shaft (6) of the roller rotor (3) or above it in the near vicinity of this rotary shaft.

3. A device as claimed in claim 2, **characterised in that** the pivotal connection point (16) of the support arms (12) is disposed within the radius region R of the roller rotor (3).

4. A device as claimed in one of claims 1 to 3, **characterised in that** the tine (9) is arranged on the stripper (8) and the latter is arranged on the cross member (11).

5. A device as claimed in one of the preceding claims, **characterised in that** the stripper (8) has a substantially arcuate contour.

6. A device as claimed in one of the preceding claims, **characterised in that** the rear end of the stripper (8) is fastened to the cross member (11) and its free front end constituting the scraper edge (18) extends close to the periphery of the roller rotor (3).

7. A device as claimed in one of the preceding claims, **characterised in that** the tines (9) are fastened to the free end of the strippers (8) and are preferably welded thereto.

8. A device as claimed in one of the preceding claims, **characterised in that** the strippers and tines (9) are made of hardened leaf spring material.

9. A device as claimed in one of the preceding claims, **characterised in that** the tines (9) are provided with an additional stripper at (10).

10. A device as claimed in one of the preceding claims, **characterised in that** the roller (1) has two support arms (12) disposed on the end faces of the roller, which are mounted on the two frame cheeks (5) disposed at the ends and support the cross member (11), which bridges the roller (1) and is arranged behind the rotary shaft (6), on which cross member the strippers (8) constituting a support device for the tines (9) are disposed.

11. A device as claimed in one of the preceding claims, **characterised in that** at least one intermediate support (19,21) is provided for the cross member (11), particularly in the event of overbroad rollers.

12. A device as claimed in claim 11, **characterised in that** the intermediate support is guided and received on the frame (4) by means of arcuate sliding or roller guides (20) or by a steering lever arrangement (22,23,24).

13. A device as claimed in one of the preceding claims, **characterised in that** the roller wheels (2) are constituted by stamped half shells with an arrow-shaped running ring (7), a corrugated web and transverse web.

14. A device as claimed in one of the preceding claims, **characterised in that** a sheet- or plate-like stripper (8) is arranged on a bracket secured to the cross member (11), particularly at its lower free end, whereby the stripper is preferably reinforced by a tine (9) arranged on the bracket.

## Revendications

1. Outil pour émietter des sols grossièrement travaillés, avec un rouleau (1) composé de plusieurs roues (2), qui sont disposées à distance les unes des autres sur un rotor (3) dont l'axe de rotation (6) est placé dans des joues latérales (5) d'un cadre (4), lesquelles joues sont reliées les unes aux autres par un support transversal (15), des bras porteurs (12) qui sont articulés sur le cadre (4) et soutenus par ressort portant un support transversal (11) et présentant des dents (9) en prise entre deux roues respectives (2), les dents étant placées à l'oblique avec un angle d'attaque plat pour le traitement des sols, et des racloirs (8) disposés sur le support transversal (11) pour le retour de la quantité de terre adhérant à l'outil entre les roues, une arête de raclage (18) formée en particulier par les racloirs (8) étant respectivement prévue entre les roues pour racler la quantité de terre du rotor (3), **caractérisé en ce que** les bras porteurs (12) sont articulés sur le cadre (4) de façon à ce qu'au moins l'arête de raclage (18), en cas de mouvement d'évitement des bras porteurs (12) contre le soutien à ressort, soit entraînée sans réduction d'écart vers le rotor (3) et que le support transversal (11) porté par les bras porteurs (12) soit disposé, vu dans le sens de fonctionnement A de l'outil, derrière l'axe de rotation (6).

2. Outil selon la revendication 1, **caractérisé en ce que** les bras porteurs (12) sont articulés sur le cadre (4) à hauteur de l'axe de rotation (6) et du rotor du rouleau (3) ou au-dessus dans la zone de proximité de cet axe de rotation.

3. Outil selon la revendication 2, **caractérisé en ce que** le point d'articulation (16) des bras porteurs (12) est disposé à l'intérieur de la zone de rayon R du rotor de rouleau (3).

4. Outil selon l'une quelconque des revendications 1 à 3, **caractérisé en ce que** les dents (9) sont disposées sur le racloir (8) et celui-ci sur le support transversal (11).

5. Outil selon l'une quelconque des revendications précédentes, **caractérisé en ce que** le racloir (8) est conçu sensiblement avec des contours en arc de cercle.

6. Outil selon l'une quelconque des revendications précédentes, **caractérisé en ce que** le racloir (8) est fixé avec son extrémité arrière sur le support transversal (11) et se rapproche avec son extrémité avant et l'extrémité libre formant l'arête de raclage (18) du pourtour du rotor de rouleau (3).

7. Outil selon l'une quelconque des revendications précédentes, **caractérisé en ce que** les dents (9) sont fixées sur l'extrémité libre des racloirs (8) avec retour rapide et sont, certes de préférence, soudées.

8. Outil selon l'une quelconque des revendications précédentes, **caractérisé en ce que** les racloirs (8) et les dents (9) sont constitués de matériau durci de ressort à lames.

9. Outil selon l'une quelconque des revendications précédentes, **caractérisé en ce que** les dents (9) sont équipées d'un racloir supplémentaire en (10).

10. Outil selon l'une quelconque des revendications précédentes, **caractérisé en ce que** le rouleau (1) présente deux bras porteurs (12) côté face frontale du rouleau, qui sont placés sur les deux joues du cadre (5) placées côté face frontale et qui portent le support transversal (11) enjambant le rouleau (1) et disposé derrière l'axe de rotation (6), support transversal sur lequel sont placés les racloirs (8) comme dispositif porteur pour les dents (9).

11. Outil selon l'une quelconque des revendications précédentes, **caractérisé en ce qu'**est prévu, particulièrement en cas de rouleaux extra larges, au moins un support intermédiaire (19, 21) pour le support transversal (11).

12. Outil selon la revendication 11, **caractérisé en ce que** le support intermédiaire est conduit et logé par l'intermédiaire de guidages à glissement ou à rouleaux en forme d'arc de cercle situés sur le cadre (4) ou par un dispositif à levier de commande (22, 23, 24).

13. Outil selon l'une quelconque des revendications précédentes, **caractérisé en ce que** les roues (2) sont constituées de demi coques estampées avec une bague de roulement en forme de flèche (7), une entretoise ondulée et des traverses.

14. Outil selon l'une quelconque des revendications précédentes, **caractérisé en ce qu'**un racloir en forme de tôle ou de plaque (8) est disposé sur un coude (25) fixé sur le support transversal (11), en particulier sur son extrémité libre inférieure, le racloir étant stabilisé de préférence par une dent (9) placée sur le coude.
